# EUROPEAN PATENT SPECIFICATION

(11) **EP 4 047 449 B1**
(45) Date of publication and mention of the grant of the patent: **04.02.2026**
(21) Application number: 21201914.5
(22) Date of filing: 11.10.2021
(51) Int. Cl.: G06F 1/16, G06F 1/20

(54) **PORTABLE ELECTRONIC APPARATUS**
TRAGBARE ELEKTRONISCHE VORRICHTUNG
APPAREIL ÉLECTRONIQUE PORTABLE

(30) Priority: 18.02.2021 TW 110105473
(43) Date of publication of application: 24.08.2022
(73) Proprietor: Acer Incorporated, New Taipei City 221 (TW)
(72) Inventor: Lin, Tzu-Wei, New Taipei City 221 (TW); Huang, Pao-Min, New Taipei City 221 (TW); Liu, Chih-Chun, New Taipei City 221 (TW); Ling, Cheng-Nan, New Taipei City 221 (TW); Tai, Wen-Chieh, New Taipei City 221 (TW)
(74) Representative: 2K Patentanwälte Blasberg Kewitz & Reichel

(56) References cited:
- TW-U- M 580 202
- US-A1- 2016 230 808
- US-A1- 2018 173 282
- US-A1- 2018 230 724
- US-A1- 2020 080 357
- US-A1- 2020 117 245
- US-B1- 10 019 039

## Description

### BACKGROUND

### Technical Field

The disclosure relates to an electronic apparatus, and in particular, relates to a portable electronic apparatus.

### Description of Related Art

With continuous advancement of the computing performance of notebook computers, heat generated by internal devices (e.g., a central processing unit, a graphics processor, or other electronic devices) during operation increases as well. Once the heat is not quickly discharged to the outside, the performance of a notebook computer may easily reduce due to overheating.

Generally, a notebook computer includes the first body responsible for logic computing and data accessing and the second body responsible for image displaying. The second body is pivotally connected to the first body to rotate and unfold with respect to the first body or to rotate and fold with respect to the first body. Further, the first body has a pivoting side and a heat dissipating hole located at the pivoting side, and heated air in the first body is discharged to the outside through the heat dissipating hole most of the time. Besides, the lower edge of the second body is connected to the pivoting side, and the second body has only the freedom of movement or rotation with respect to the first body. After the second body rotates and unfolds with respect to the first body, the lower edge of the second body may move close to the pivoting side of the first body and the heat dissipating hole located at the pivoting side and thus blocks the patch configured to allow the heated air in the first body to be discharged to the outside, and poor heat dissipating efficiency is thereby provided. The documents US20180230724A1, US20160230808A1, US 2020117245A1, US2020080357A1, US10019039B1, TWM580202U, US2018173282A1 provide technological background

### SUMMARY

The disclosure provides a portable electronic apparatus exhibiting good heat dissipating efficiency.

The disclosure provides a portable electronic apparatus including a first body, a second body, and a hinge mechanism according to the claims. The first body has a pivoting side and a heat dissipating hole located at the pivoting side. The second body is pivotally and slidably connected to the first body through the hinge mechanism. The hinge mechanism includes a rack, a rotating shaft, and a driving component. The rack is fixed in the first body as corresponding to the pivoting side. The rotating shaft is connected to the second body. The driving component is connected to the rotating shaft and is mechanically coupled to the rack. When the second body rotates and unfolds with respect to the first body through the hinge mechanism, the rotating shaft rotates together with the second body, and the driving component rotates together with the rotating shaft. At the same time, the driving component rotates and slides with respect to the rack and drives the second body to slide away from the pivoting side to increase a distance between the second body and the heat dissipating hole.

To sum up, when the second body rotates with respect to the first body, the second body slides with respect to the first body. To be specific, when the second body rotates and unfolds with respect to the first body through the hinge mechanism, the second body slides with respect to the first body and slides away from the pivoting side of the first body and the heat dissipating hole located at the pivoting side to increase the distance between the lower edge of the second body and the heat dissipating hole. Through the increase in the distance between the lower edge of the second body and the heat dissipating hole, the heat dissipating hole is not blocked by the lower edge of the second body, so that heated air inside the first body may be quickly discharged to the outside through the heat dissipating hole. The portable electronic apparatus provided by the disclosure therefore exhibits good heat dissipating efficiency.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1A is a side schematic view of an enlarged local portion of a portable electronic apparatus in a folded state according to a first embodiment of the disclosure.
FIG. 1B is a side schematic view of the enlarged local portion of the portable electronic apparatus in an unfolded state according to the first embodiment of the disclosure.
FIG. 1C is a top schematic view of the enlarged local portion of FIG. 1B.
FIG. 2A is a top schematic view of an enlarged local portion of a portable electronic apparatus in the unfolded state according to a second embodiment of the disclosure.
FIG. 2B is an enlarged schematic view of a hinge mechanism of FIG. 2A from another viewing angle.
FIG. 3A is a side schematic view of an enlarged local portion of a portable electronic apparatus in the folded state according to a third embodiment of the disclosure.
FIG. 3B is a side schematic view of the enlarged local portion of the portable electronic apparatus in the unfolded state according to the third embodiment of the disclosure.
FIG. 4A and FIG. 4B are schematic views of movement of an automatic folding structure applied to the hinge mechanism of the first embodiment.

### DESCRIPTION OF THE EMBODIMENTS

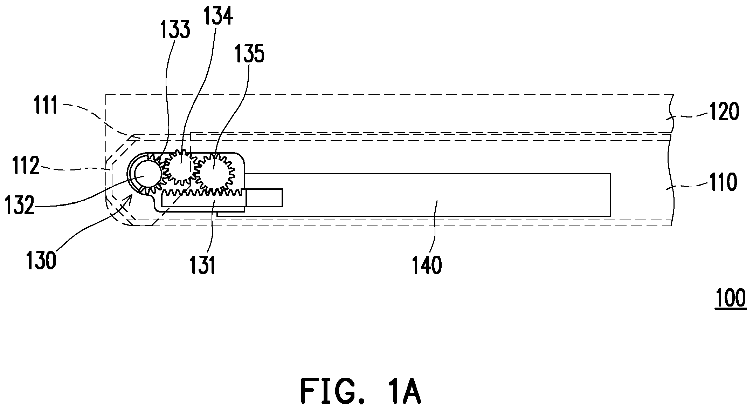

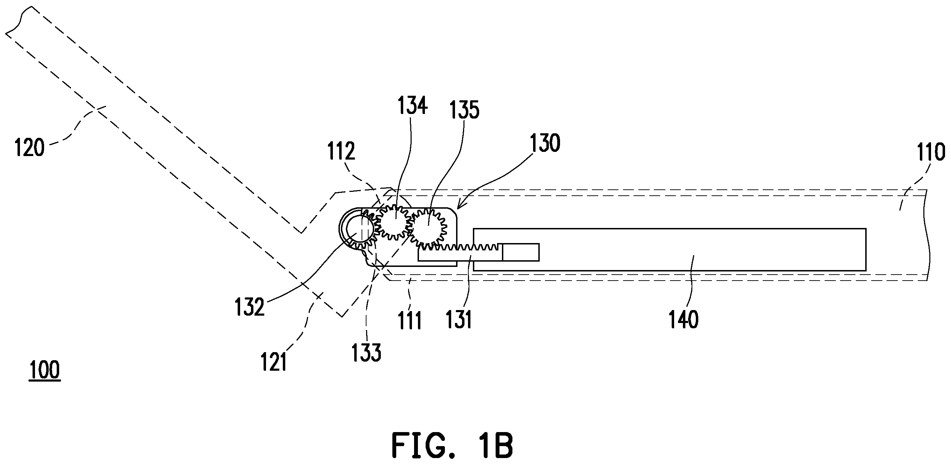

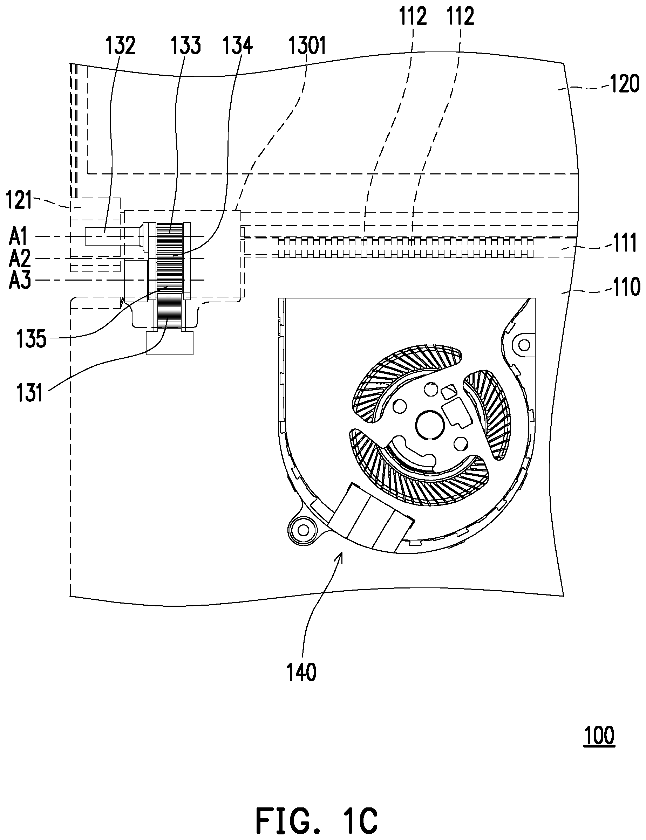

FIG. 1A is a side schematic view of an enlarged local portion of a portable electronic apparatus in a folded state according to a first embodiment of the disclosure. FIG. 1B is a side schematic view of the enlarged local portion of the portable electronic apparatus in an unfolded state according to the first embodiment of the disclosure. FIG. 1C is a top schematic view of the enlarged local portion of FIG. 1B. Note that a first body 110, a second body 120, and a hinge cover 1301 are shown in dotted lines in the drawings to clearly present internal structure configurations of the first body 110, the second body 120, and the hinge cover 1301.

With reference to FIG. 1A to FIG. 1C, in this embodiment, a portable electronic apparatus 100 may be a notebook computer and includes the first body 110, the second body 120, and a hinge mechanism 130. The first body 110 has logic computing and data accessing capabilities and the like, and the second body 120 has an image displaying capability. The second body 120 is connected to the first body 110 through the hinge mechanism 130, and the hinge mechanism 130 provides the second body 120 with the freedom of movement of rotation and sliding with respect to the first body 110.

Further, when the second body 120 rotates with respect to the first body 110 through the hinge mechanism 130, the second body 120 slides with respect to the first body 110 at the same time and generates movement in a horizontal direction. The first body 110 has a pivoting side 111 and a heat dissipating hole 112 located at the pivoting side 111, and one portion of the hinge mechanism 130 is disposed on the first body 110 as corresponding to the pivoting side 111. A lower edge 121 of the second body 120 is connected to the first body 110 through the hinge mechanism 130, and the other portion of the hinge mechanism 130 is disposed on the second body 120 as corresponding to the lower edge 121.

With reference to FIG. 1A to FIG. 1C, the hinge mechanism 130 includes a rack 131, a rotating shaft 132, and a driving component. The rack 131 is fixed in the first body 110 as corresponding to the pivoting side 111. An extending direction and an extending length of the rack 131 may be configured to determine a sliding direction and a sliding stroke of the second body 120. The rotating shaft 132 is connected to the second body 120 to synchronously rotate and slide together with the second body 120.

In this embodiment, the driving component includes a first spur gear 133, a second spur gear 134, and a third spur gear 135. The first spur gear 133 is connected to the rotating shaft 132, and a combination of the first spur gear 133 and the rotating shaft 132 may be a gear shaft. Alternatively, the first spur gear 133 is sleeved and fixed on the rotating shaft 132. The first spur gear 133 meshes with the second spur gear 134, the second spur gear 134 meshes with the third spur gear 135, and the third spur gear 135 meshes with the rack 131. For instance, the hinge mechanism 130 may include the hinge cover 1301 and may be configured to accommodate the rack 131, the rotating shaft 132, the first spur gear 133, the second spur gear 134, and the third spur gear 135. In addition, the rotating shaft 132 may be rotatably inserted in the hinge cover 1301, and the hinge cover 1301 may slide together with the rotating shaft 132, the first spur gear 133, the second spur gear 134, and the third spur gear 135, and the second body 120 synchronously.

When the second body 120 rotates and unfolds with respect to the first body 110 through the hinge mechanism 130, the rotating shaft 132 and the first spur gear 133 rotate together with the second body 120. The first spur gear 133 drives the second spur gear 134, and the second spur gear 134 drives the third spur gear 135 at the same time. Rotation directions of the second body 120, the rotating shaft 132, the first spur gear 133, and the third spur gear 135 are identical and are opposite to a rotation direction of the second spur gear 134. Besides, the rotating shaft 132 and the first spur gear 133 rotate around a rotation axis A1. The second spur gear 134 rotates around a rotation axis A2 parallel to the rotation axis A1, and the third spur gear 135 rotates around a rotation axis A3 parallel to the rotation axis A1.

Because the rack 131 is fixed, the rotating third spur gear 135 slides with respect to the rack 131 and drives the second spur gear 134, the first spur gear 133, the rotating shaft 132, and the second body 120 to synchronously slide.

Following the above, as driven by the hinge mechanism 130, the second body 120 slides with respect to the first body 110 and slides away from the pivoting side 111 of the first body 110 and the heat dissipating hole 112 located at the pivoting side 111 to increase a distance between the lower edge 121 of the second body 120 and the heat dissipating hole 112. Through the increase in the distance between the lower edge 121 of the second body 120 and the heat dissipating hole 112, the heat dissipating hole 112 is not blocked by the lower edge 121 of the second body 120, so that heated air inside the first body 110 may be quickly discharged to the outside through the heat dissipating hole 112. The portable electronic apparatus 100 therefore exhibits good heat dissipating efficiency.

Generally, a fan 140 is disposed in the first body 110 and is configured to forcibly discharge heat generated by a heat source (e.g., a central processing unit, a graphics processor, or other electronic devices) in the first body 110. To be specific, cold air in the first body 110 may form hot air (i.e., the heated air) after absorbing heat generated by the heat source, and when the fan 140 runs, the heated air may be forcibly discharged through the heat dissipating hole 112. When the second body 120 unfolds with respect to the first body 110, the lower edge 121 of the second body 120 moves away from the pivoting side 111 of the first body 110, and in this way, a sufficient heat dissipating space is provided around the heat dissipating hole 112 to accelerate dissipating of the heated air to other places.

The driving component in this embodiment is formed by three spur gears. In another embodiment, the driving component includes one spur gear. In still another embodiment, the driving component includes an odd number of spur gears, and the number is greater than three.

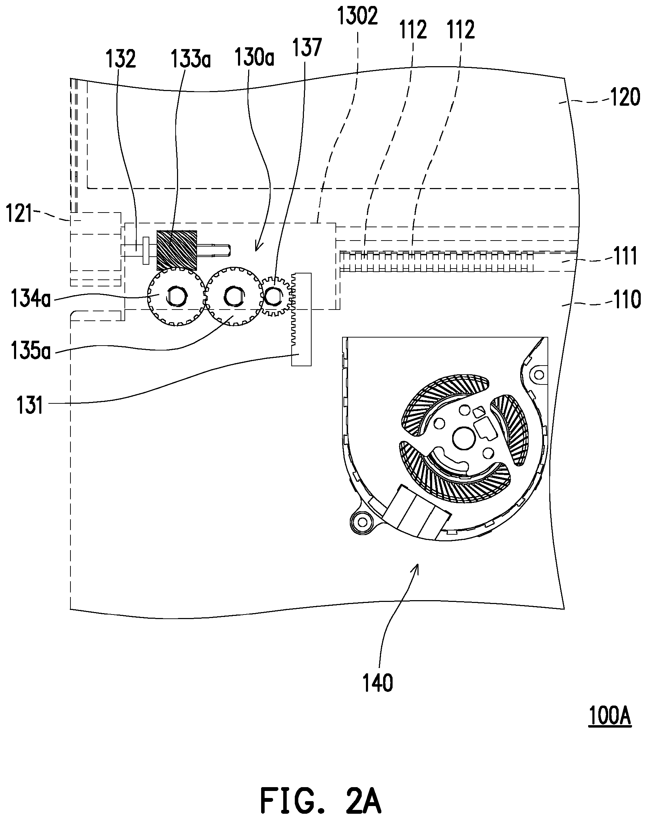

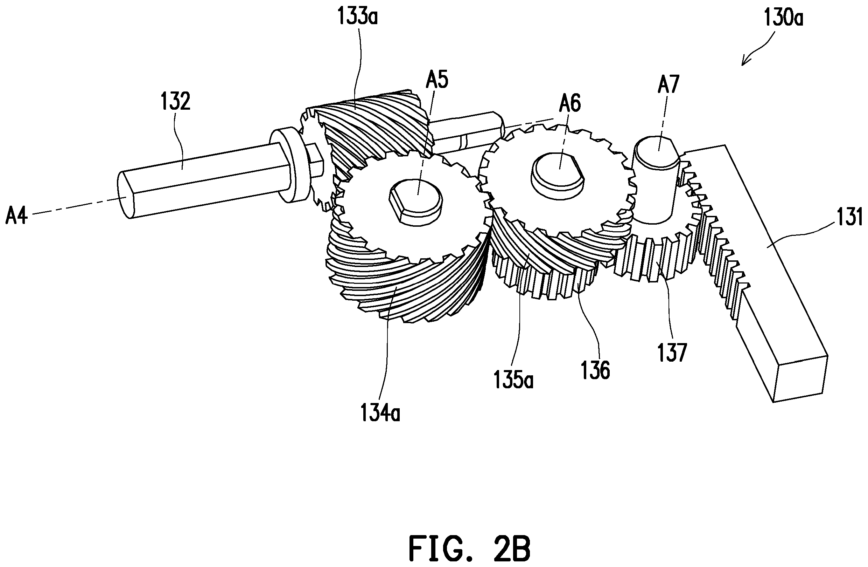

FIG. 2A is a top schematic view of an enlarged local portion of a portable electronic apparatus in the unfolded state according to a second embodiment of the disclosure. FIG. 2B is an enlarged schematic view of a hinge mechanism of FIG. 2A from another viewing angle. Note that the first body 110, the second body 120, and a hinge cover 1302 are shown in dotted lines in the drawings to clearly present the internal structure configurations of the first body 110, the second body 120, and the hinge cover 1302.

With reference to FIG. 2A and FIG. 2B, a design principle of a portable electronic apparatus 100A in this embodiment is similar to a design principle of the portable electronic apparatus 100 in the first embodiment, and a difference therebetween lies in the structural type of the driving component. In this embodiment, the driving component includes a first bevel gear 133a, a second bevel gear 134a, a third bevel gear 135a, a synchronous spur gear 136, and a driven spur gear 137. The first bevel gear 133a is connected to the rotating shaft 132, and a combination of the first bevel gear 133a and the rotating shaft 132 may be a gear shaft. Alternatively, the first bevel gear 133a is sleeved and fixed on the rotating shaft 132. The first bevel gear 133a meshes with the second bevel gear 134a, and the second bevel gear 134a meshes with the third bevel gear 135a. The synchronous spur gear 136 is disposed on the third bevel gear 135a, and the third bevel gear 135a and the synchronous spur gear 136 synchronously rotate. The synchronous spur gear 136 meshes with the driven spur gear 137, and the synchronous spur gear 137 meshes with the rack 131.

For instance, a hinge mechanism 130a may include the hinge cover 1302 and may be configured to accommodate the rack 131, the rotating shaft 132, the first bevel gear 133a, the second bevel gear 134a, the third bevel gear 135a, the synchronous spur gear 136, and the driven spur gear 137. In addition, the rotating shaft 132 may be rotatably inserted in the hinge cover 1302, and the hinge cover 1302 may slide together with the rotating shaft 132, the first bevel gear 133a, the second bevel gear 134a, the third bevel gear 135a, the synchronous spur gear 136, the driven spur gear 137, and the second body 120 synchronously.

When the second body 120 rotates and unfolds with respect to the first body 110 through the hinge mechanism 130a, the rotating shaft 132 and the first bevel gear 133a rotate together with the second body 120. The first bevel gear 133a drives the second bevel gear 134a, and the second bevel gear 134a drives the third bevel gear 135a at the same time. The synchronous spur gear 136 rotates together with the third bevel gear 135a and drives the driven spur gear 137. Rotation directions of the second bevel gear 134a and the driven spur gear 137 are identical and are opposite to rotation directions of the third bevel gear 135a and the synchronous spur gear 136. Besides, the rotating shaft 132 and the first bevel gear 133a rotate around a rotation axis A4, and the second bevel gear 134a rotates around a rotation axis A5. The third bevel gear 135a and the synchronous spur gear 136 rotate around a rotation axis A6, and the driven spur gear 137 rotates around a rotation axis A7. The rotation axes A5 to A7 are parallel to one another, and the rotation axis A4 is not parallel or perpendicular to the rotation axes A5 to A7.

Because the rack 131 is fixed, the rotating driven spur gear 137 slides with respect to the rack 131 and drives the synchronous spur gear 136, the third bevel gear 135a, the second bevel gear 134a, the first bevel gear 133a, the rotating shaft 132, and the second body 120 to synchronously slide.

Following the above, as driven by the hinge mechanism 130a, the second body 120 slides with respect to the first body 110 and slides away from the pivoting side 111 of the first body 110 and the heat dissipating hole 112 located at the pivoting side 111 to increase the distance between the lower edge 121 of the second body 120 and the heat dissipating hole 112. Through the increase in the distance between the lower edge 121 of the second body 120 and the heat dissipating hole 112, the heat dissipating hole 112 is not blocked by the lower edge 121 of the second body 120, so that heated air inside the first body 110 may be quickly discharged to the outside through the heat dissipating hole 112. The portable electronic apparatus 100A therefore exhibits good heat dissipating efficiency.

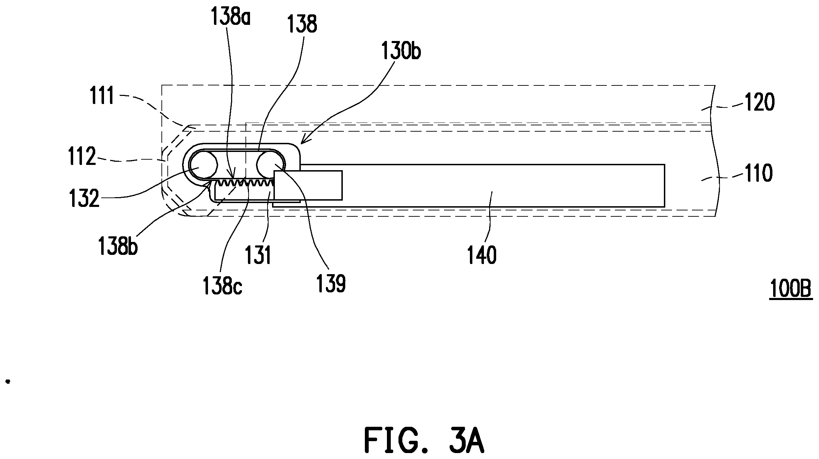

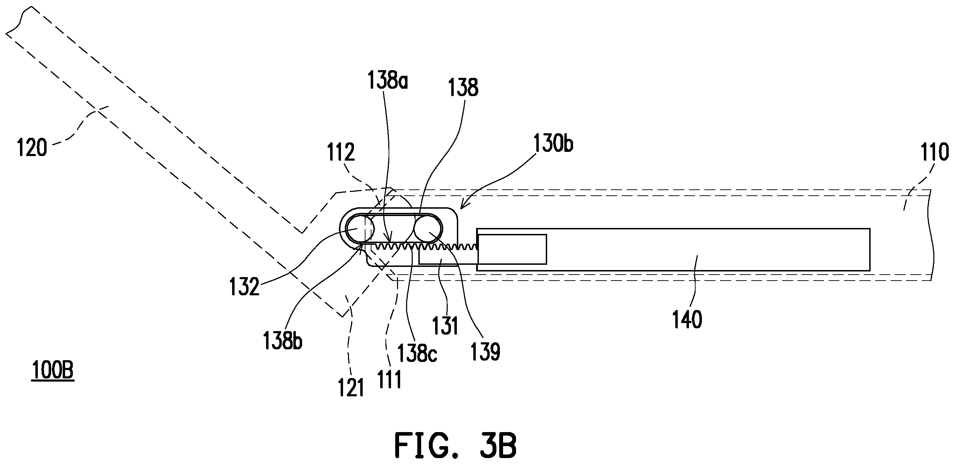

FIG. 3A is a side schematic view of an enlarged local portion of a portable electronic apparatus in the folded state according to a third embodiment of the disclosure. FIG. 3B is a side schematic view of the enlarged local portion of the portable electronic apparatus in the unfolded state according to the third embodiment of the disclosure. Note that the first body 110 and the second body 120 are shown in dotted lines in the drawings to clearly present the internal structure configurations of the first body 110 and the second body 120.

With reference to FIG. 3A and FIG. 3B, a design principle of a portable electronic apparatus 100B in this embodiment is similar to the design principle of the portable electronic apparatus 100 in the first embodiment, and a difference therebetween lies in the structural type of the driving component. In this embodiment, the driving component includes a toothed belt 138. The toothed belt 138 has an inner surface 138a contacting the rotating shaft 132, an outer surface 138b opposite to the inner surface 138a, and a plurality of driving teeth 138c protruding from the outer surface 138b, and the driving teeth 138c mesh with the rack 131.

When the second body 120 rotates and unfolds with respect to the first body 110 through a hinge mechanism 130b, the rotating shaft 132 drives the toothed belt 138 to rotate or to scroll. Because the rack 131 is fixed, the rotating or scrolling toothed belt 138 slides with respect to the rack 131 and drives the rotating shaft 132 and the second body 120 to synchronously slide.

Following the above, as driven by the hinge mechanism 130b, the second body 120 slides with respect to the first body 110 and slides away from the pivoting side 111 of the first body 110 and the heat dissipating hole 112 located at the pivoting side 111 to increase the distance between the lower edge 121 of the second body 120 and the heat dissipating hole 112. Through the increase in the distance between the lower edge 121 of the second body 120 and the heat dissipating hole 112, the heat dissipating hole 112 is not blocked by the lower edge 121 of the second body 120, so that heated air inside the first body 110 may be quickly discharged to the outside through the heat dissipating hole 112. The portable electronic apparatus 100B therefore exhibits good heat dissipating efficiency.

In this embodiment, the hinge mechanism 130b further includes a driven shaft 139 pivotally disposed on the second body 120, and the driven shaft 139 and the rotating shaft 132 are disposed side by side. The driven shaft 139 is parallel to the rotating shaft 132 and contacts the inner surface 138a of the toothed belt 138. The rotating shaft 132 and the driven shaft 139 are configured to stretch the toothed belt 138 to allow the toothed belt 138 to have sufficient tension, so that the toothed belt 138 is prevented from collapsing. On the other hand, the rotating shaft 132 drives the toothed belt 138 to rotate or to scroll, and the driven shaft 139 is driven by the toothed belt 138 and rotates synchronously.

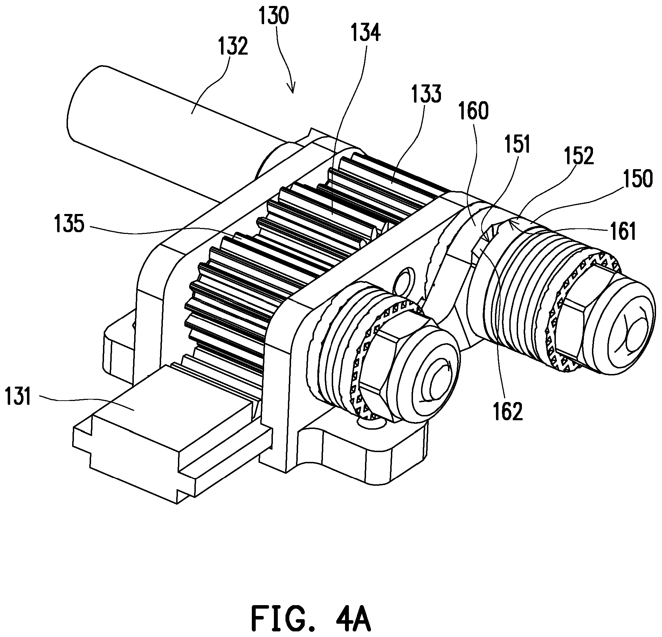

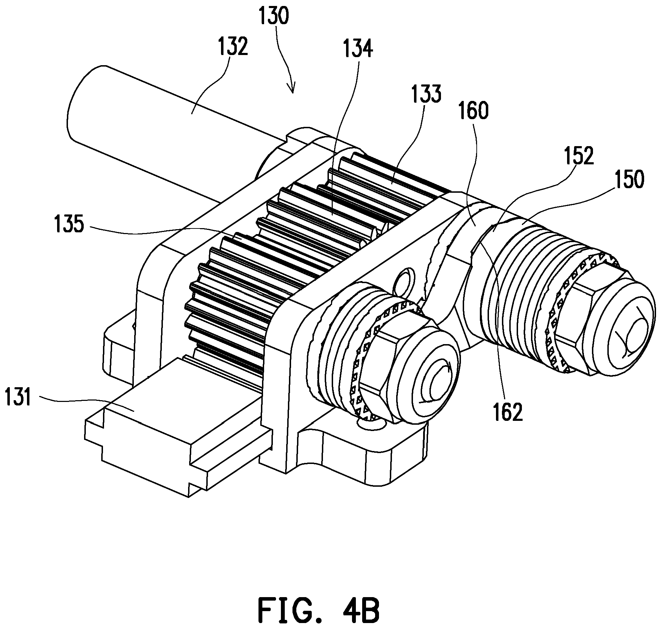

FIG. 4A and FIG. 4B are schematic views of movement of an automatic folding structure applied to the hinge mechanism of the first embodiment. With reference to FIG. 4A and FIG. 4B, the automatic folding structure may be integrated with the hinge mechanism 130 and includes a first torsion piece 150 and a second torsion piece 160. The first torsion piece 150 is sleeved and fixed on the rotating shaft 132 and synchronously rotates together with the rotating shaft 132. The second torsion piece 160 is sleeved on the rotating shaft 132, and the rotating shaft 132 and the first torsion piece 150 may rotate with respect to the second torsion piece 160. To be specific, the first torsion piece 150 has a sliding contact surface 151 facing the second torsion piece 160, and the second torsion piece 160 has a positioning contact surface 161 facing the first torsion piece 150.

The second torsion piece 160 further includes a positioning recess 162 recessed in the positioning contact surface 161, and the first torsion piece 150 has a sliding protrusion 152 protruding from the sliding contact surface 151. When the first torsion piece 150 rotates with respect to the second torsion piece 160, the sliding protrusion 152 slides on the positioning contact surface 161. Once the sliding protrusion 152 moves into the positioning recess 162, an automatic folding force is generated owing to matching between the sliding protrusion 152 and the positioning recess 162 and drives the sliding protrusion 152 to completely move in and be engaged with the positioning recess 162. At the same time, the first torsion piece 150 drives the rotating shaft 132, and the second body 120 (see FIG. 1A) is driven by the rotating shaft 132 and is automatically folded on the first body 110 (see FIG. 1A).

On the other hand, when the first torsion piece 150 rotates with respect to the second torsion piece 160 to move the sliding protrusion 152 out of the positioning recess 162, as long as the sliding protrusion 152 does not completely move out of the positioning recess 162, the abovementioned automatic folding force may drive the sliding protrusion 152 to completely move back in and be engaged with the positioning recess 162.

For instance, a driving range of the automatic folding force is approximately between 0 and 20 degrees. That is, as long as an expanding angle of the second body 120 (see FIG. 1A) with respect to the first body 110 (see FIG. 1A) does not exceed 20 degrees, the automatic folding force may drive the second body 120 to be folded on the first body 110 (see FIG. 1A).

Note that the automatic folding structure may also be applied to the hinge mechanism 130a in the second embodiment and the hinge mechanism 130b in the third embodiment.

In view of the foregoing, when the second body rotates with respect to the first body, the second body slides with respect to the first body. To be specific, when the second body rotates and unfolds with respect to the first body through the hinge mechanism, the second body slides with respect to the first body and slides away from the pivoting side of the first body and the heat dissipating hole located at the pivoting side to increase the distance between the lower edge of the second body and the heat dissipating hole. Through the increase in the distance between the lower edge of the second body and the heat dissipating hole, the heat dissipating hole is not blocked by the lower edge of the second body, so that heated air inside the first body may be quickly discharged to the outside through the heat dissipating hole. The portable electronic apparatus provided by the disclosure therefore exhibits good heat dissipating efficiency.

## Claims

1. A portable electronic apparatus (100, 100A, 100B), comprising:
a first body (110), having a pivoting side (111) and a heat dissipating hole (112) located at the pivoting side (111),
a second body (120); and
a hinge mechanism (130, 130a, 130b), wherein the second body (120) is pivotally and slidably connected to the first body (110) through the hinge mechanism (130, 130a, 130b), and **characterised by** the hinge mechanism (130, 130a, 130b) comprising:
a rack (131), fixed in the first body (110) as corresponding to the pivoting side (111);
a rotating shaft (132), connected to the second body (120); and
a driving component, mechanically coupled to the rack (131) and to the rotating shaft (132), wherein the driving component is configured to mechanically transform the rotation of the rotating shaft (132) into a sliding movement of the driving component with respect to the rack (131),
wherein when the second body (120) rotates and unfolds with respect to the first body (110) through the hinge mechanism (130, 130a, 130b), the rotating shaft (132) rotates together with the second body (120), and the driving component rotates together with the rotating shaft (132), and the driving component rotates and slides with respect to the rack (131) and drives the second body (120) to slide away from the pivoting side (111) to increase a distance between the second body (120) and the heat dissipating hole (112).

2. The portable electronic apparatus (100, 100A, 100B) according to claim 1, wherein the driving component comprises a first spur gear (133), a second spur gear (134), and a third spur gear (135), the first spur gear (133) is connected to the rotating shaft (132) and meshes with the second spur gear (134), the second spur gear (134) meshes with the third spur gear (135), and the third spur gear (135) meshes with the rack (131).

3. The portable electronic apparatus (100, 100A, 100B) according to claim 2, wherein the rotating shaft (132), the first spur gear (133), the second spur gear (134), and the third spur gear (135) synchronously slide together with the second body (120).

4. The portable electronic apparatus (100, 100A, 100B) according to claim 2, wherein rotation axes (A4, A1, A2, A3) of the rotating shaft (132), the first spur gear (133), the second spur gear (134), and the third spur gear (135) are parallel to one another.

5. The portable electronic apparatus (100, 100A, 100B) according to claim 1, wherein the driving component comprises a first bevel gear (133a), a second bevel gear (134a), a third bevel gear (135a), a synchronous spur gear (136), and a driven spur gear (137), and the first bevel gear (133a) is connected to the rotating shaft (132) and meshes with the second bevel gear (134a), wherein the second bevel gear (134a) meshes with the third bevel gear (135a), the synchronous spur gear (136) is fixed on the third bevel gear (135a) and meshes with the driven spur gear (137), and the driven spur gear (137) meshes with the rack (131).

6. The portable electronic apparatus (100, 100A, 100B) according to claim 5, wherein the rotating shaft (132), the first bevel gear (133a), the second bevel gear (134a), the third bevel gear (135a), the synchronous spur gear (136), and the driven spur gear (137) synchronously slide together with the second body (120).

7. The portable electronic apparatus (100, 100A, 100B) according to claim 5, wherein a rotation axis (A4) of the rotating shaft (132) and the first bevel gear (133a) is not parallel to rotation axes (A5, A6, A7) of the second bevel gear (134a), the third bevel gear (135a), the synchronous spur gear (136), and the driven spur gear (137), and the rotation axes (A5, A6, A7) of the second bevel gear (134a), the third bevel gear (135a), the synchronous spur gear (136), and the driven spur gear (137) are parallel to one another.

8. The portable electronic apparatus (100, 100A, 100B) according to claim 1, wherein the driving component comprises a toothed belt (138), the toothed belt (138) has an inner surface (138a) contacting the rotating shaft (132), an outer surface (138b) opposite to the inner surface (138a), and a plurality of driving teeth (138c) protruding from the outer surface (138b), and the driving teeth (138c) mesh with the rack (131).

9. The portable electronic apparatus (100, 100A, 100B) according to claim 8, wherein the rotating shaft (132) and the toothed belt (138) synchronously slide together with the second body (120).

10. The portable electronic apparatus (100, 100A, 100B) according to claim 8, wherein the hinge mechanism (130, 130a, 130b) further comprises a driven shaft (139) pivotally disposed on the second body (120), the driven shaft (139) and the rotating shaft (132) are disposed side by side, and the inner surface (138a) of the toothed belt (138) contacts the driven shaft (139).

11. The portable electronic apparatus (100, 100A, 100B) according to claim 1, wherein the hinge mechanism (130, 130a, 130b) further comprises a first torsion piece (150) and a second torsion piece (160), the first torsion piece (150) is sleeved and fixed on the rotating shaft (132), and the second torsion piece (160) is rotatably sleeved on the rotating shaft (132).

12. The portable electronic apparatus (100, 100A, 100B) according to claim 11, wherein the first torsion piece (150) has a sliding contact surface (151) facing the second torsion piece (160) and a sliding protrusion (152) protruding from the sliding contact surface (151), the second torsion piece (160) has a positioning contact surface (161) facing the first torsion piece (150) and a positioning recess (162) recessed in the positioning contact surface (161), and the sliding protrusion (152) slides on the positioning contact surface (161) or moves into the positioning recess (162).

## Patentansprüche

1. Ein tragbares elektronisches Gerät (100, 100A, 100B), umfassend:
einen ersten Körper (110) mit einer Schwenkseite (111) und einem Wärmeableitungsloch (112), das sich an der Schwenkseite (111) befindet,
einen zweiten Körper (120); und
einen Scharniermechanismus (130, 130a, 130b), wobei der zweite Körper (120) über den Scharniermechanismus (130, 130a, 130b) schwenkbar und verschiebbar mit dem ersten Körper (110) verbunden ist, und **dadurch gekennzeichnet, dass** der Scharniermechanismus (130, 130a, 130b) umfasst:
eine Zahnstange (131), die im ersten Körper (110) entsprechend der Schwenkseite (111) befestigt ist;
eine Drehwelle (132), die mit dem zweiten Körper (120) verbunden ist; und
eine Antriebskomponente, die mechanisch mit der Zahnstange (131) und der Drehwelle (132) gekoppelt ist, wobei die Antriebskomponente so konfiguriert ist, dass sie die Drehung der Drehwelle (132) mechanisch in eine Gleitbewegung der Antriebskomponente in Bezug auf die Zahnstange (131) umwandelt,
wobei, wenn sich der zweite Körper (120) in Bezug auf den ersten Körper (110) durch den Scharniermechanismus (130, 130a, 130b) dreht und entfaltet, sich die Drehwelle (132) zusammen mit dem zweiten Körper (120) dreht, und die Antriebskomponente dreht sich zusammen mit der Drehwelle (132), und die Antriebskomponente dreht sich und gleitet in Bezug auf die Zahnstange (131) und treibt den zweiten Körper (120) an, sich von der Schwenkseite (111) weg zu bewegen, um einen Abstand zwischen dem zweiten Körper (120) und dem Wärmeableitungsloch (112) zu vergrößern.

2. Das tragbare elektronische Gerät (100, 100A, 100B) nach Anspruch 1, wobei die Antriebskomponente ein erstes Stirnrad (133), ein zweites Stirnrad (134) und ein drittes Stirnrad (135) umfasst, wobei das erste Stirnrad (133) mit der Drehwelle (132) verbunden ist und mit dem zweiten Stirnrad (134) kämmt, das zweite Stirnrad (134) mit dem dritten Stirnrad (135) kämmt und das dritte Stirnrad (135) mit der Zahnstange (131) kämmt.

3. Das tragbare elektronische Gerät (100, 100A, 100B) nach Anspruch 2, wobei die Drehwelle (132), das erste Stirnrad (133), das zweite Stirnrad (134) und das dritte Stirnrad (135) synchron mit dem zweiten Körper (120) gleiten.

4. Das tragbare elektronische Gerät (100, 100A, 100B) nach Anspruch 2, wobei die Drehachsen (A4, A1, A2, A3) der Drehwelle (132), des ersten Stirnrads (133), des zweiten Stirnrads (134) und des dritten Stirnrads (135) parallel zueinander sind.

5. Das tragbare elektronische Gerät (100, 100A, 100B) nach Anspruch 1, wobei die Antriebskomponente ein erstes Kegelrad (133a), ein zweites Kegelrad (134a), ein drittes Kegelrad (135a), ein synchrones Stirnrad (136) und ein angetriebenes Stirnrad (137) umfasst, und das erste Kegelrad (133a) mit der Drehwelle (132) verbunden ist und mit dem zweiten Kegelrad (134a) kämmt, wobei das zweite Kegelrad (134a) mit dem dritten Kegelrad (135a) kämmt, das Synchron-Stirnrad (136) auf dem dritten Kegelrad (135a) befestigt ist und mit dem angetriebenen Stirnrad (137) kämmt, und das angetriebene Stirnrad (137) mit der Zahnstange (131) kämmt.

6. Das tragbare elektronische Gerät (100, 100A, 100B) gemäß Anspruch 5, wobei die Drehwelle (132), das erste Kegelrad (133a), das zweite Kegelrad (134a), das dritte Kegelrad (135a), das Synchron-Stirnrad (136) und das angetriebene Stirnrad (137) synchron mit dem zweiten Körper (120) gleiten.

7. Das tragbare elektronische Gerät (100, 100A, 100B) gemäß Anspruch 5, wobei eine Drehachse (A4) der Drehwelle (132) und des ersten Kegelrads (133a) nicht parallel zu den Drehachsen (A5, A6, A7) des zweiten Kegelrads (134a), des dritten Kegelrads (135a), des synchronen Stirnrads (136) und dem angetriebenen Stirnrad (137) sind, und die Drehachsen (A5, A6, A7) des zweiten Kegelrads (134a), des dritten Kegelrads (135a), des Synchron-Stirnrads (136) und des angetriebenen Stirnrads (137) parallel zueinander sind.

8. Das tragbare elektronische Gerät (100, 100A, 100B) nach Anspruch 1, wobei die Antriebskomponente einen Zahnriemen (138) umfasst, der Zahnriemen (138) eine Innenfläche (138a), die mit der Drehwelle (132) in Kontakt steht, eine der Innenfläche (138a) gegenüberliegende Außenfläche (138b) und eine Vielzahl von Antriebszähnen (138c) aufweist, die aus der Außenfläche (138b) herausragen, und die Antriebszähne (138c) mit der Zahnstange (131) in Eingriff stehen.

9. Das tragbare elektronische Gerät (100, 100A, 100B) nach Anspruch 8, wobei die Drehwelle (132) und der Zahnriemen (138) synchron mit dem zweiten Körper (120) gleiten.

10. Das tragbare elektronische Gerät (100, 100A, 100B) nach Anspruch 8, wobei der Scharniermechanismus (130, 130a, 130b) ferner eine angetriebene Welle (139) umfasst, die schwenkbar am zweiten Körper (120) angeordnet ist, wobei die angetriebene Welle (139) und die Drehwelle (132) nebeneinander angeordnet sind, und die Innenfläche (138a) des Zahnriemens (138) die angetriebene Welle (139) berührt.

11. Das tragbare elektronische Gerät (100, 100A, 100B) nach Anspruch 1, wobei der Scharniermechanismus (130, 130a, 130b) ferner ein erstes Torsionsstück (150) und ein zweites Torsionsstück (160) umfasst, wobei das erste Torsionsstück (150) auf die Drehwelle (132) aufgesteckt und daran befestigt ist und das zweite Torsionsstück (160) drehbar auf die Drehwelle (132) aufgesteckt ist.

12. Das tragbare elektronische Gerät (100, 100A, 100B) gemäß Anspruch 11, wobei das erste Torsionsstück (150) eine dem zweiten Torsionsstück (160) zugewandte Gleitkontaktfläche (151) und einen aus der Gleitkontaktfläche (151) herausragenden Gleitvorsprung (152) aufweist, das zweite Torsionsstück (160) eine dem ersten Torsionsstück (150) zugewandte Positionierungskontaktfläche (161) und eine in die Positionierungskontaktfläche (161) eingelassene Positionierungsausnehmung (162) aufweist, und der Gleitvorsprung (152) auf der Positionierungskontaktfläche (161) gleitet oder sich in die Positionierungsausnehmung (162) bewegt.

## Revendications

1. Un appareil électronique portable (100, 100A, 100B) comprenant :
un premier corps (110) comportant un côté pivotant (111) et un trou de dissipation thermique (112) situé sur le côté pivotant (111),
un deuxième corps (120) ; et
un mécanisme à charnière (130, 130a, 130b), le deuxième corps (120) étant relié au premier corps (110) de manière pivotante et coulissante via le mécanisme à charnière (130, 130a, 130b), et **caractérisé en ce que** le mécanisme à charnière (130, 130a, 130b) comprend :
une crémaillère (131) fixée dans le premier corps (110) en correspondance avec le côté pivotant (111) ;
un arbre rotatif (132) relié au deuxième corps (120) ; et
un composant d'entraînement couplé mécaniquement à la crémaillère (131) et à l'arbre rotatif (132), le composant d'entraînement étant configuré pour convertir mécaniquement la rotation de l'arbre rotatif (132) en un mouvement de glissement du composant d'entraînement par rapport à la crémaillère (131),
dans lequel, lorsque le deuxième corps (120) pivote et se déplie par rapport au premier corps (110) grâce au mécanisme à charnière (130, 130a, 130b), l'arbre rotatif (132) tourne avec le deuxième corps (120) et le composant d'entraînement tourne avec l'arbre rotatif (132), et le composant d'entraînement tourne et glisse par rapport à la crémaillère (131) et entraîne le deuxième corps (120) à s'éloigner du côté pivotant (111) afin d'augmenter la distance entre le deuxième corps (120) et le trou de dissipation thermique (112).

2. L'appareil électronique portable (100, 100A, 100B) selon la revendication 1, dans lequel le composant d'entraînement comprend une première roue dentée droite (133), une deuxième roue dentée droite (134) et une troisième roue dentée droite (135), la première roue dentée droite (133) étant reliée à l'arbre rotatif (132) et engrène avec la deuxième roue dentée droite (134), la deuxième roue dentée droite (134) engrène avec la troisième roue dentée droite (135) et la troisième roue dentée droite (135) engrène avec la crémaillère (131).

3. L'appareil électronique portable (100, 100A, 100B) selon la revendication 2, dans lequel l', l'arbre rotatif (132), la première roue dentée (133), la deuxième roue dentée (134) et la troisième roue dentée (135) coulissent de manière synchrone avec le deuxième corps (120).

4. L'appareil électronique portable (100, 100A, 100B) selon la revendication 2, dans lequel les axes de rotation (A4, A1, A2, A3) de l'arbre rotatif (132), de la première roue dentée droite (133), de la deuxième roue dentée droite (134) et de la troisième roue dentée droite (135) sont parallèles les uns aux autres.

5. L'appareil électronique portable (100, 100A, 100B) selon la revendication 1, dans lequel le composant d'entraînement comprend une première roue conique (133a), une deuxième roue conique (134a), une troisième roue conique (135a), une roue dentée synchrone (136) et une roue dentée entraînée (137), et la première roue conique (133a) est reliée à l'arbre rotatif (132) et engrène avec la deuxième roue conique (134a), la deuxième roue conique (134a) engrenant avec la troisième roue conique (135a), la roue dentée synchrone (136) est fixée sur la troisième roue conique (135a) et engrène avec la roue dentée menée (137), et la roue dentée menée (137) engrène avec la crémaillère (131).

6. L'appareil électronique portable (100, 100A, 100B) selon la revendication 5, dans lequel l'arbre rotatif (132), la première roue conique (133a), la deuxième roue conique (134a), la troisième roue conique (135a), la roue dentée droite synchrone (136) et la roue dentée droite entraînée (137) coulissent de manière synchrone avec le deuxième corps (120).

7. L'appareil électronique portable (100, 100A, 100B) selon la revendication 5, dans lequel un axe de rotation (A4) de l'arbre rotatif (132) et de la première roue conique (133a) n'est pas parallèle aux axes de rotation (A5, A6, A7) de la deuxième roue conique (134a), de la troisième roue conique (135a), de la roue dentée droite synchrone (136) et de la roue dentée droite entraînée (137), et les axes de rotation (A5, A6, A7) de la deuxième roue conique (134a), de la troisième roue conique (135a), de la roue dentée droite synchrone (136) et de la roue dentée droite entraînée (137) sont parallèles entre eux.

8. L'appareil électronique portable (100, 100A, 100B) selon la revendication 1, dans lequel le composant d'entraînement comprend une courroie crantée (138), la courroie crantée (138) ayant une surface intérieure (138a) en contact avec l'arbre rotatif (132), une surface extérieure (138b) opposée à la surface intérieure (138a) et une pluralité de dents d'entraînement (138c) faisant saillie à partir de la surface extérieure (138b), les dents d'entraînement (138c) s'engrenant avec la crémaillère (131).

9. L'appareil électronique portable (100, 100A, 100B) selon la revendication 8, dans lequel l' t l'arbre rotatif (132) et la courroie crantée (138) glissent de manière synchrone avec le deuxième corps (120).

10. L'appareil électronique portable (100, 100A, 100B) selon la revendication 8, dans lequel le mécanisme à charnière (130, 130a, 130b) comprend en outre un arbre entraîné (139) disposé de manière pivotante sur le deuxième corps (120), l'arbre entraîné (139) et l'arbre rotatif (132) étant disposés côte à côte, et la surface intérieure (138a) de la courroie crantée (138) étant en contact avec l'arbre entraîné (139).

11. L'appareil électronique portable (100, 100A, 100B) selon la revendication 1, dans lequel le mécanisme à charnière (130, 130a, 130b) comprend en outre une première pièce de torsion (150) et une deuxième pièce de torsion (160), la première pièce de torsion (150) étant enfichée sur l'arbre rotatif (132) et fixée à celui-ci, et la deuxième pièce de torsion (160) étant enfichée de manière rotative sur l'arbre rotatif (132).

12. L'appareil électronique portable (100, 100A, 100B) selon la revendication 11, dans lequel la première pièce de torsion (150) présente une surface de contact coulissante (151) tournée vers la deuxième pièce de torsion (160) et une saillie coulissante (152) dépassant de la surface de contact coulissante (151) (152) dépassant de la surface de contact coulissante (151), la deuxième pièce de torsion (160) comportant une surface de contact de positionnement (161) tournée vers la première pièce de torsion (150) et un évidement de positionnement (162) encastré dans la surface de contact de positionnement (161), et la saillie coulissante (152) coulisse sur la surface de contact de positionnement (161) ou se déplace dans l'évidement de positionnement (162).
